Europäisches Patentamt

European Patent Office

Office européen des brevets

(11) Veröffentlichungsnummer: **0 033 143**
**A1**

## (12) EUROPÄISCHE PATENTANMELDUNG

(21) Anmeldenummer: 81100505.7

(22) Anmeldetag: 23.01.81

(51) Int. Cl.³: **F 16 G 11/12**
**B 21 D 53/24, B 23 P 15/00**

(30) Priorität: 24.01.80 JP 7509/80

(43) Veröffentlichungstag der Anmeldung:
05.08.81 Patentblatt 81/31

(84) Benannte Vertragsstaaten:
AT DE FR IT NL

(71) Anmelder: Schumann, Harro
Rüterbruch 20
D-5982 Neuenrade(DE)

(72) Erfinder: Kawabata, Yoshio
19-2, Higashi Fujiidera-Cho
Fujiidera City Osaka Prefecture(JP)

(74) Vertreter: Strehl, Peter K.L. Schiff, Dr. A.v. Füner et al,
Dipl. Ing. P. Strehl Dr. U. Schübel-Hopf Dipl. Ing.
D.Ebbinghaus Dr. Ing. D. Finck Patentanwälte
Mariahilfplatz 2&3
D-8000 München 90(DE)

(54) Verfahren zur Herstellung von Spannschlossmuttern.

(57) Bei dem Verfahren zur Herstellung von Spannschloß-muttern werden jeweils Ringe von einem Stahlrohr quer zu seiner Achse abgeschnitten, diese Ringe von gegenüberlie-genden Seiten zusammengedrückt und ein Hohlkörper (2) hergestellt, der aus zwei im wesentlichen parallelen Stegtei-len (3) sowie Verbindungsteilen (4) besteht, die gegenüber-liegende Enden der Stegteile (3) verbinden. Es schließt sich ein Kragenformen oder Durchstechen der mittleren Bereiche der beiden Verbindungsteile (4) an, um kurze Zylinderteile (5) an den jeweiligen Verbindungsteilen (4) auszubilden, in wel-che dann ein Rechtsgewinde bzw. ein Linksgewinde (6, 6') eingeschnitten wird. Die Stegteile (3) können durch entspre-chende Formgebung eine erhöhte Festigkeit aufweisen.

./...

FIG. 2

FIG. 4

Verfahren zur Herstellung von Spannschloßmuttern

Die Erfindung betrifft ein Verfahren zur Herstellung von Spannschlußmuttern.

Die meisten herkömmlichen warmgeschmiedeten Spannschloßmuttern weisen Nachteile im Hinblick auf die erforderlichen Fertigungsschritte, Ausstattung, Materialkosten, Leistungsfähigkeit usw. auf. Zur Lösung dieser Probleme sind bereits die verschiedensten Verfahren und andere Produkte als geschmiedete Erzeugnisse bekannt geworden, bei denen eine Spannschloßmutter einen Hauptkörper besitzt, der durch Preßverformung hergestellt worden ist, wobei Gewindemuttern an die gegenüberliegenden Enden angeschweißt sind. All diese bekannten Anordnungen sind jedoch nicht frei von Nachteilen.

Aufgabe der Erfindung ist es daher, ein neuartiges Verfahren zur Herstellung von Spannschloßmuttern anzugeben, mit dem sich im Handel erhältliche Stahlrohre einfacher sowie bei geringeren Kosten verarbeiten lassen.

Die erfindungsgemäße Lösung besteht darin, daß folgende Verfahrensschritte durchgeführt werden: Abschneiden von Ringen von einem Stahlrohr quer zu seiner Achse, Zusammendrücken der jeweiligen Ringe von gegenüberliegenden Seiten zur Herstellung eines Hohlkörpers, der aus zwei im wesentlichen parallelen Stegteilen sowie Verbindungsteilen besteht, welche gegenüberliegende Enden der Stegteile verbinden, Kragenformen der mittleren oder zentralen Bereiche der beiden Verbindungsteile zur Ausbildung von kurzen Zylinderteilen an den jeweiligen Verbindungsteilen und Schneiden eines Rechtsgewindes in dem einen sowie eines Linksgewindes in dem anderen Zylinderteil.

In Weiterbildung des erfindungsgemäßen Verfahrens können die Stegteile zu einander gegenüberliegenden Flachteilen oder Winkelteilen gebogen werden, deren Flachseiten paarweise parallel zueinander verlaufen. Bei anderen Ausführungsformen können die Stegteile jeweils über den größten Teil ihrer Länge zusammengedrückt werden, so daß ein allmählicher Übergang zwischen den Stegteilen und den Verbindungsteilen entsteht. Außerdem kann die Verformung der Stegteile nur in einem Bereich im Abstand von den Verbindungsteilen durchgeführt werden. Mit diesen Maßnahmen wird in vorteilhafter Weise eine Verstärkung der so hergestellten Spannschloßmuttern erreicht, ohne daß zu diesem Zweck eine Gewichtserhöhung durch massivere Ausbildung erforderlich ist. Somit kann eine erhöhte Festigkeit bei geringem Gewicht erzielt werden.

In Weiterbildung des erfindungsgemäßen Verfahrens können die Zylinderteile an den jeweiligen Enden der Spannschloßmuttern von innen nach außen oder von außen nach innen hergestellt werden, so daß sie entweder nach außen oder aber ins Innere der Spannschloßmutter vorstehen. Auch insofern ist eine Anpassung an die jeweiligen Gegebenheiten möglich.

Die Erfindung wird nachstehend anhand der Beschreibung von Ausführungsbeispielen und unter Bezugnahme auf die beiliegende Zeichnung näher erläutert. Die Zeichnung zeigt in

Figur 1    eine perspektivische Darstellung zur Erläuterung des ersten Verfahrensschrittes;

Figur 2    eine Vorderansicht des aus dem Rohr herausgeschnittenen Ringes zur Erläuterung des zweiten Verfahrensschrittes;

Figur 3   einen Schnitt längs der Linie A-A der Figur 2;

Figur 4   eine Seitenansicht, teilweise mit Wegbrechungen, zur Erläuterung des dritten Verfahrensschrittes;

Figur 5   eine Draufsicht der Anordnung nach Figur 4;

Figur 6   eine Seitenansicht, teilweise mit Wegbrechungen, zur Erläuterung des vierten Verfahrensschrittes;

Figur 7   eine Draufsicht auf die Anordnung gemäß Figur 6;

Figur 8   eine Draufsicht, teilweise im Querschnitt, zur Erläuterung einer zweiten Ausführungsform;

Figur 9   eine perspektivische Seitenansicht einer dritten Ausführungsform einer mit dem erfindungsgemäßen Verfahren hergestellten Spannschloßmutter;

Figur 10  eine Seitenansicht der Anordnung gemäß Figur 9;

Figur 11  eine Draufsicht auf die Anordnung gemäß Figur 10;

Figur 12  einen Schnitt durch die Anordnung gemäß Figur 10 und 11 längs der Linie B-B in Figur 11;

Figur 13  eine Seitenansicht der Anordnung gemäß Figur 9;

Figur 14  eine perspektivische Darstellung einer vierten Ausführungsform der mit dem erfindungsgemäßen Verfahren hergestellten Spannschloßmutter;

Figur 15  eine Seitenansicht der Anordnung gemäß Figur 14;

Figur 16  eine Draufsicht der Anordnung gemäß Figur 14 und 15;

Figur 17  einen Schnitt durch die Ausführungsform nach Figur 15 und 16 längs der Linie C-C in Figur 16;

Figur 18  einen Schnitt durch die Anordnung gemäß Figur 15 längs der Linie D-D;

Figur 19  eine Seitenansicht der Anordnung gemäß Figur 14 und 15;

Figur 20  eine perspektivische Darstellung einer fünften Ausführungsform einer mit dem erfindungsgemäßen Verfahren hergestellten Spannschloßmutter;

Figur 21  eine Seitenansicht der Anordnung nach Figur 20;

Figur 22  eine Draufsicht auf die Anordnung gemäß Figur 21;

Figur 23 einen Schnitt durch die Anordnung gemäß Figur 21
und 22 längs der Linie E-E in Figur 22;

Figur 24 einen Schnitt durch die Anordnung nach Figur 21
längs der Linie F-F;

Figur 25 eine Seitenansicht der Anordnung gemäß Figur 20
und 21;

Figur 26 eine perspektivische Darstellung einer sechsten
Ausführungsform einer mit dem erfindungsgemäßen
Verfahren hergestellten Spannschloßmutter;

Figur 27 eine Seitenansicht der Anordnung nach Figur 26;

Figur 28 eine Draufsicht auf die Anordnung nach Figur 27;

Figur 29 einen Schnitt durch die Anordnung gemäß Figur 27
und 28 längs der Linie G-G in Figur 28;

Figur 30 einen Schnitt durch die Anordnung nach Figur 27
längs der Linie H-H; und in

Figur 31 eine Seitenansicht der Anordnung gemäß Figur 26 und
27.

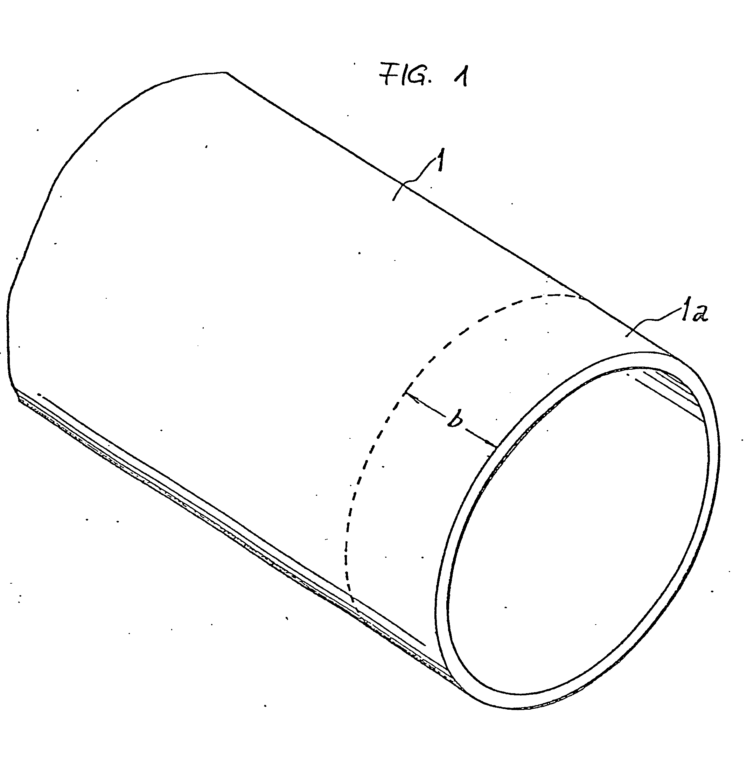

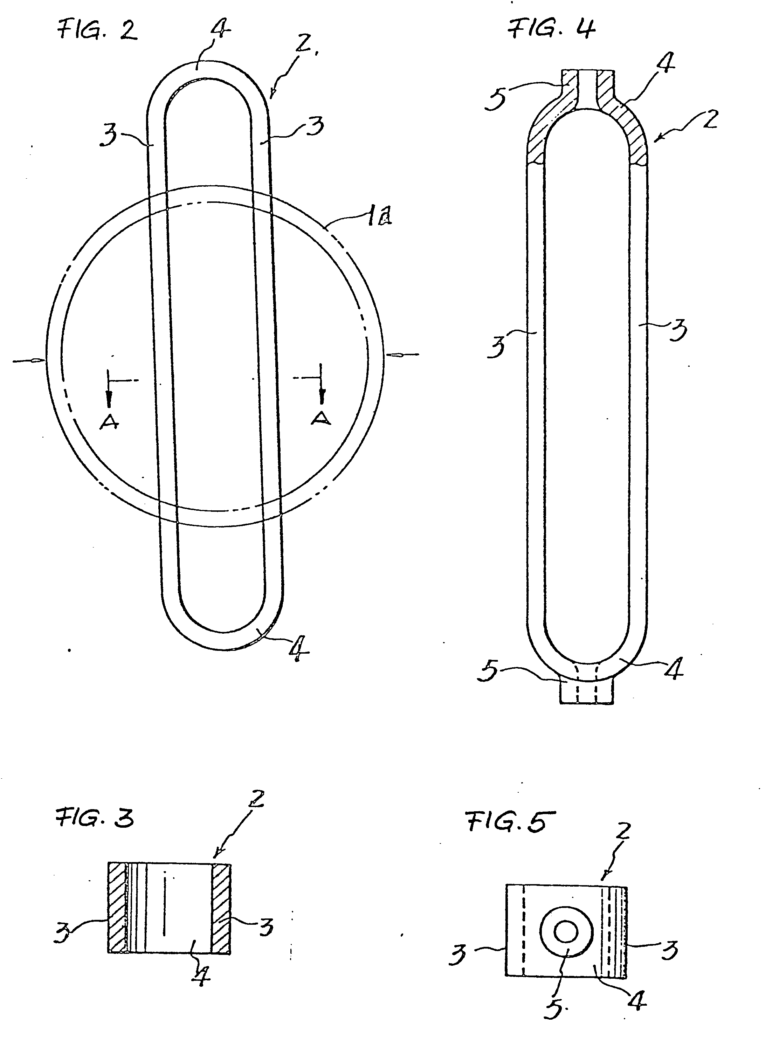

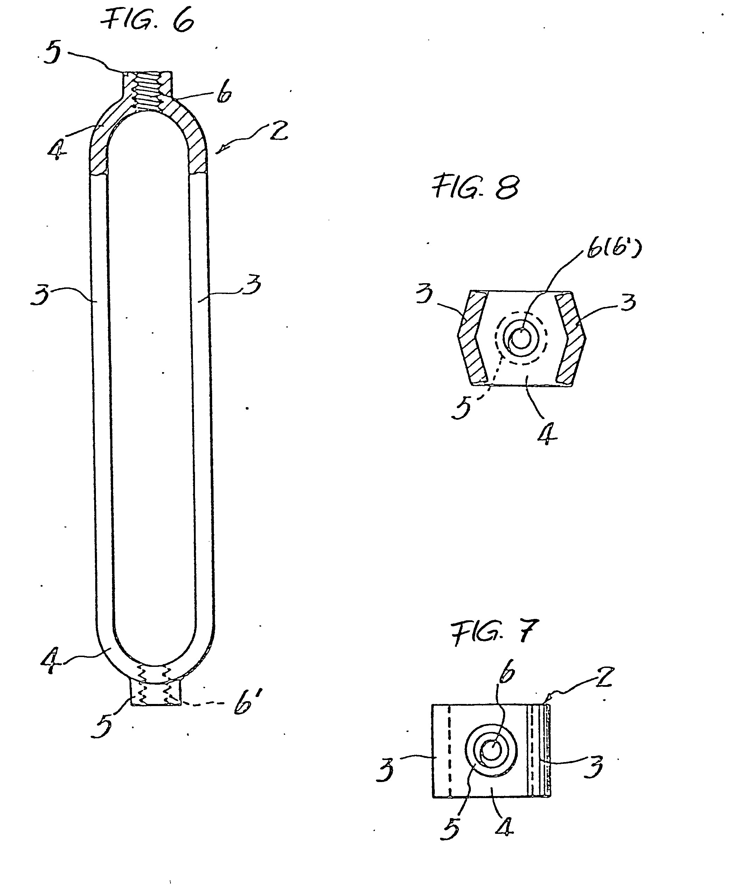

Wie in Figur 1 angedeutet, wird ein im Handel erhältliches dickwandiges Stahlrohr 1 verwendet und quer in Ringe
1a zerschnitten, die jeweils eine erforderliche Breite b
besitzen. Jeder Ring 1a wird dann in der in Figur 2 angedeuteten Weise von gegenüberliegenden Seiten zusammengedrückt,
um einen länglichen Hohlkörper 2 herzustellen, der aus
zwei im wesentlichen parallelen Stegteilen 3 und gebogenen
Verbindungsteilen 4 besteht, welche die gegenüberliegenden
Enden der Stegteile 3 verbinden. Als nächstes wird ein
Kragenformen oder Durchstechen bei den mittleren oder zentralen Bereichen der beiden gebogenen Verbindungsteile 4
durchgeführt, um kurze Zylinderteile 5 auszubilden, wie es
in Figur 4 dargestellt ist. In jedes der beiden Zylinderteile 5 wird dann ein Gewinde eingeschnitten, und zwar
ein Rechtsgewinde in das eine und ein Linksgewinde in das
andere Zylinderteil. Diese beiden Gewinde sind in Figur 6
mit den Bezugszeichen 6 und 6' bezeichnet. Draufsichten
mit und ohne Gewinde sind in den Figuren 5 bzw. 7 dargestellt, während Figur 3 einen Schnitt durch die Anordnung

- 5 -

gemäß Figur 2 zeigt.

Eine zweite Ausführungsform ist in Figur 8 dargestellt, in der man Stegteile 3 erkennt, die winkelförmig gebogen sind, wobei die jeweiligen Flachseiten paarweise parallel zueinander verlaufen können. Mit diesem winkelförmigen Querschnitt läßt sich in vorteilhafter Weise eine Verstärkungswirkung erzielen, wobei sich gleichzeitig eine Spannschloßmutter hoher Festigkeit und geringen Gewichtes ergibt, da zur Erhöhung der Festigkeit kein zusätzliches Material erforderlich ist.

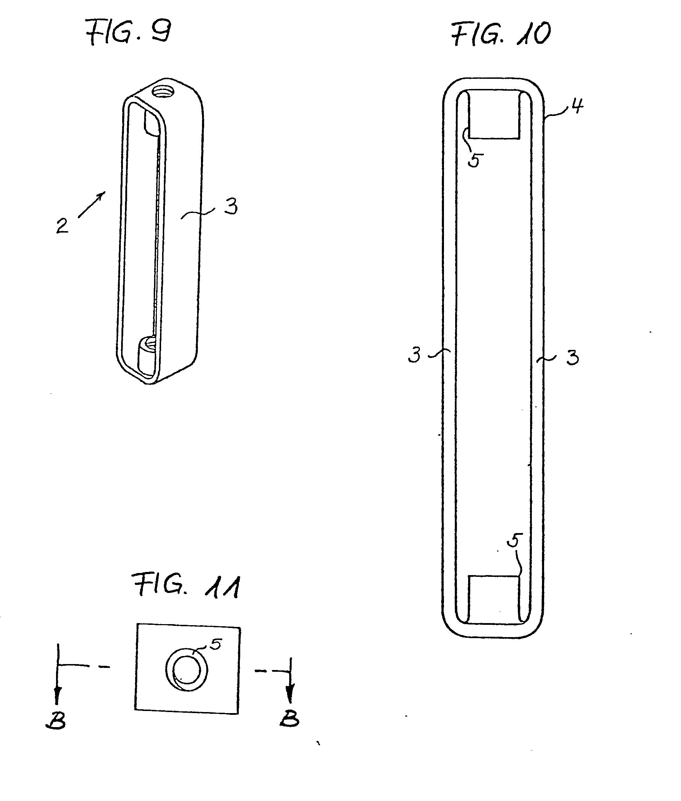

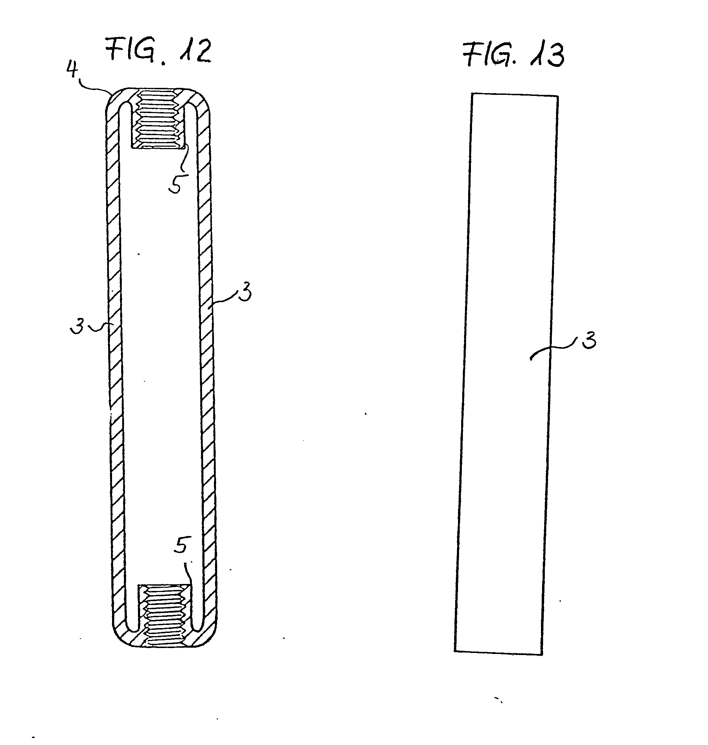

Bei den übrigen Ausführungsformen werden die gleichen Bezugszeichen für entsprechende Teile der Spannschloßmuttern verwendet, so daß auf diese Ausführungsformen nur kurz eingegangen werden soll. Eine dritte Ausführungsform ist in den Figuren 9 bis 13 dargestellt, in denen man Stegteile 3 erkennt, die in Abweichung von der Ausführungsform nach Figur 8 als Flachteile ausgebildet sind. Ferner sind die Zylinderteile an den Enden der Spannschloßmuttern so vorgesehen, daß sie ins Innere der Spannschloßmutter vorstehen.

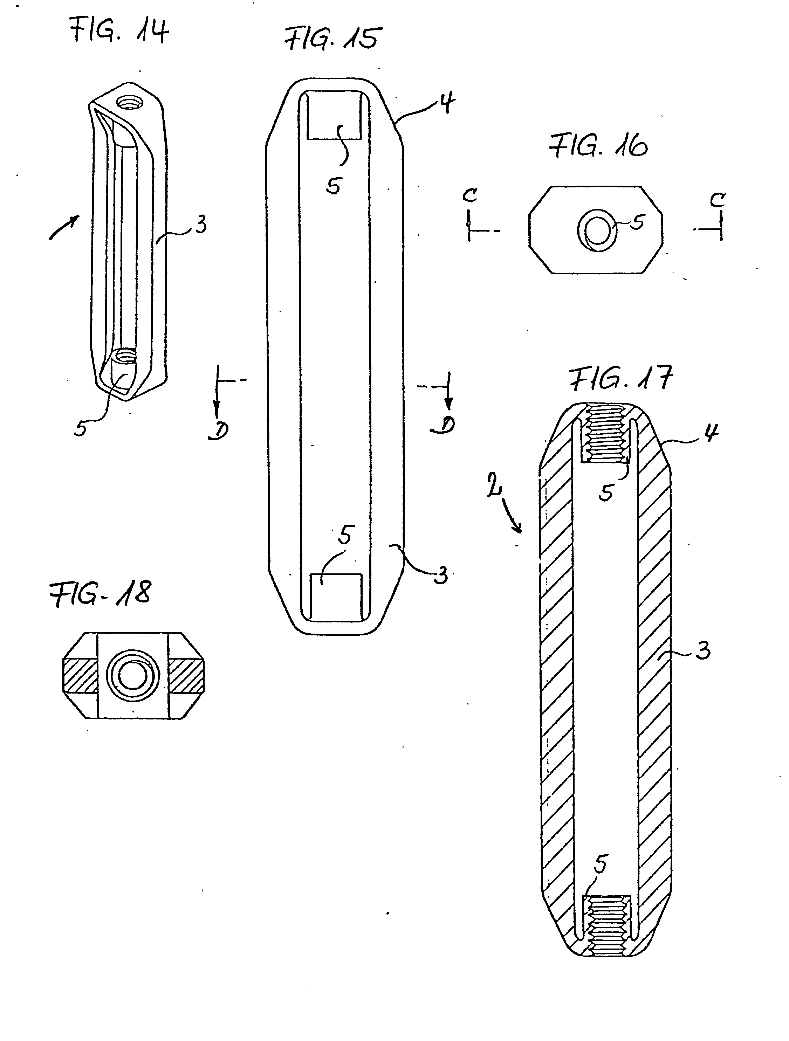

Eine weitere Ausführungsform ist in den Figuren 14 bis 19 dargestellt, wobei die Stegteile hierbei jeweils über den größten Teil ihrer Länge so zusammengedrückt worden sind, daß ein allmählicher Übergang zwischen den Stegteilen und den Verbindungsteilen entsteht. Diese Einziehung ist am deutlichsten in Figur 14 und 19 erkennbar. Auch bei dieser Ausführungsform stehen, ähnlich wie bei der vorherigen Ausführungsform, die die Gewinde aufnehmenden Zylinderteile ins Innere der Spannschloßmutter vor.

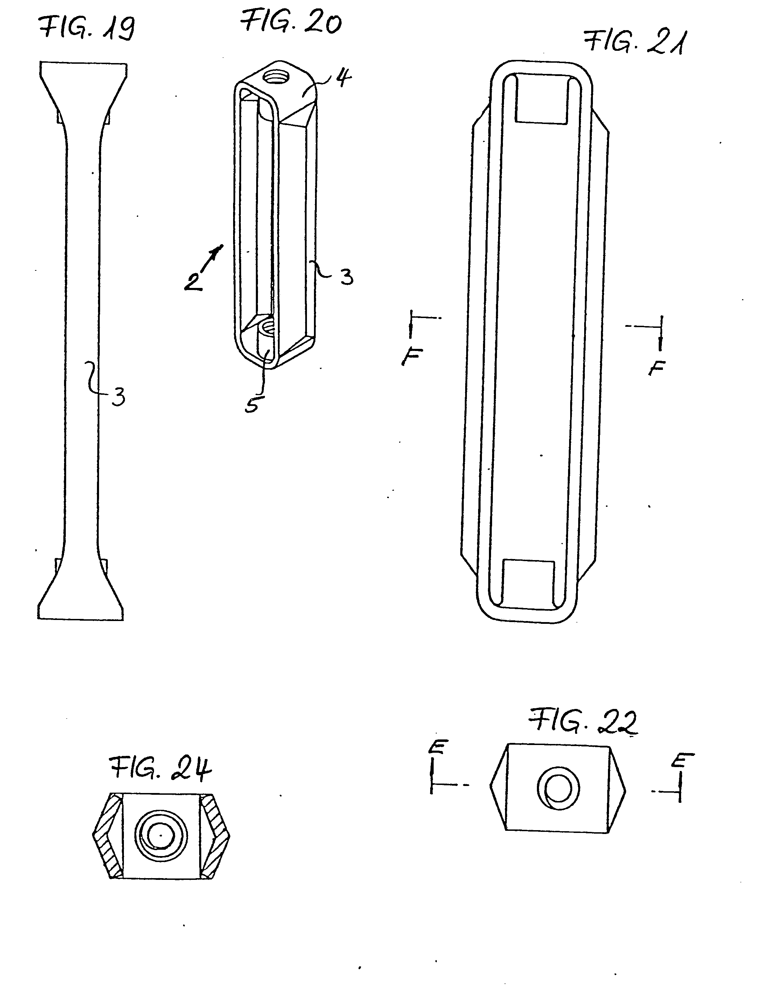

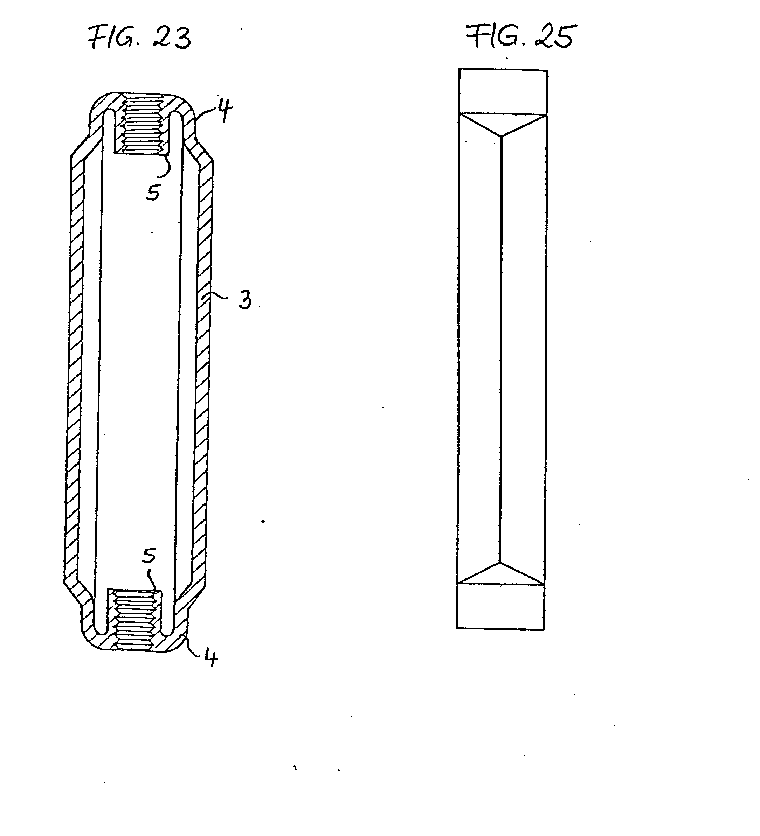

Eine weitere Ausführungsform ist in den Figuren 20 bis 25 dargestellt, wobei in ähnlicher Weise wie bei der Ausführungsform nach Figur 8 winkelförmige Stegteile vorgesehen sind. Man erkennt ferner, daß die Verformung der Stegteile 3 nur in einem Bereich im Abstand von den Verbindungsteilen durchgeführt worden ist, wie die Figuren 20 und 23 zeigen. Die Verbindungsteile 4 besitzen dabei eine S-förmige Krümmung.

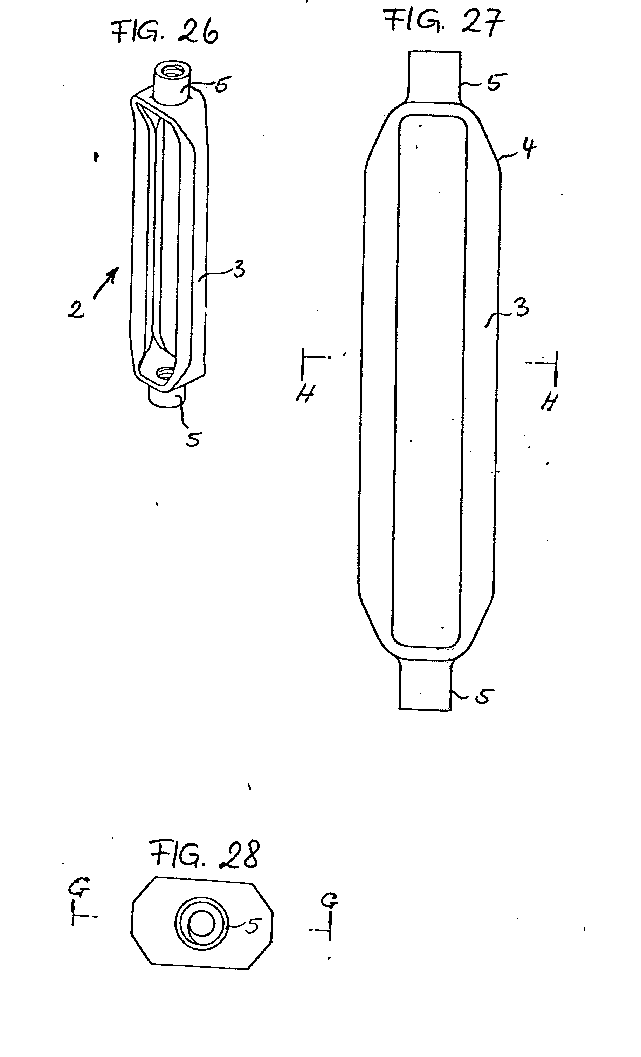

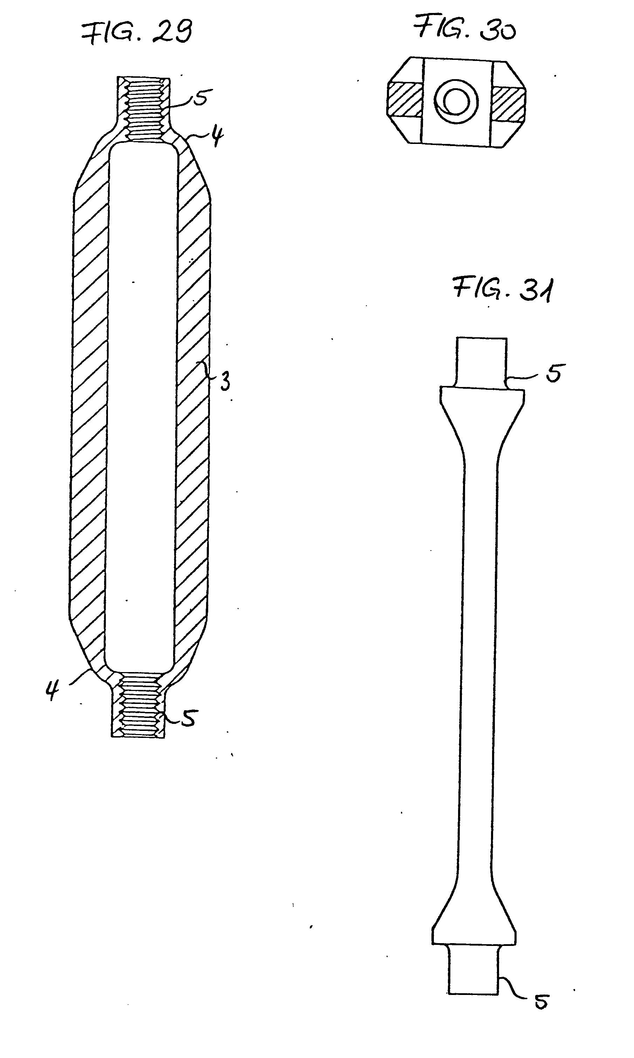

Die Figuren 26 bis 31 zeigen schließlich eine weitere Ausführungsform, die ähnlich der Ausführungsform gemäß Figur 14 bis 19 ausgebildet ist, allerdings mit dem Unterschied, daß die Zylinderteile, die Rechts- bzw. Linksgewinde aufnehmen, die an den Enden der Spannschloßmutter nach außen vorstehen, während sie bei der Ausführungsform nach Figur 14 bis 19 im Inneren des Hohlkörpers 2 untergebracht sind.

PATENTANSPRÜCHE

1. Verfahren zur Herstellung von Spannschlußmuttern, g e k e n n z e i c h n e t durch folgende Verfahrens-schritte

Abschneiden von Ringen von einem Stahlrohr quer zu seiner Achse,

Zusammendrücken der jeweiligen Ringe von gegenüberliegenden Seiten zur Herstellung eines Hohlkörpers, der aus zwei im wesentlichen parallelen Stegteilen sowie Verbindungsteilen besteht, welche gegenüberliegende Enden der Stegteile verbinden,

Kragenformen der mittleren Bereiche der beiden Verbindungsteile zur Herstellung von kurzen Zylinderteilen an den jeweiligen Verbindungsteilen und

Schneiden eines Rechtsgewindes in dem einen sowie eines Linksgewindes in dem anderen Zylinderteil.

2. Verfahren nach Anspruch 1, dadurch g e k e n n -z e i c h n e t , daß die Stegteile zu einander gegenüberliegenden Flachteilen gepreßt werden.

3. Verfahren nach Anspruch 1, dadurch g e k e n n -z e i c h n e t , daß die Stegteile zu einander gegenüberliegenden Winkelteilen gebogen werden, deren Flachseiten gegebenenfalls paarweise parallel zueinander verlaufen.

4. Verfahren nach Anpsruch 1, dadurch g e k e n n - z e i c h n e t , daß die Stegteile jeweils über den größten Teil ihrer Länge zusammengedrückt werden, so daß ein allmählicher Übergang zwischen den Stegteilen und den Verbindungsteilen entsteht.

5. Verfahren nach einem der Ansprüche 1 bis 4, dadurch g e k e n n z e i c h n e t , daß die Verformung der Stegteile nur in einem Bereich im Abstand von den Verbindungsteilen durchgeführt wird.

6. Verfahren nach einem der Ansprüche 1 bis 5, dadurch g e k e n n z e i c h n e t , daß die Ausbildung der Zylinderteile an den jeweiligen Enden von innen nach außen durchgeführt wird, so daß sie nach außen vorstehen.

7. Verfahren nach einem der Ansprüche 1 bis 5, dadurch g e k e n n z e i c h n e t , daß die Ausbildung der Zylinderteile an den jeweiligen Enden von außen nach innen durchgeführt wird, so daß sie ins Innere der Spannschloßmutter vorstehen.

FIG. 1

0033143

FIG. 2

FIG. 4

FIG. 3

FIG. 5

FIG. 6

FIG. 8

FIG. 7

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 24

FIG. 22

FIG. 23

FIG. 25

FIG. 26

FIG. 27

FIG. 28

0033143

FIG. 29

FIG. 30

FIG. 31

Europäisches
Patentamt

**EUROPÄISCHER RECHERCHENBERICHT**

Nummer der Anmeldung
**EP 81 10 0505**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | US - A - 3 065 006 (GRINNELL CORP) * Das ganze Dokument * -- | | F 16 G 11/12 B 21 D 53/24 B 23 P 15/00 |
| A | US - A - 2 053 522 (GOURLEY,B.) * Das ganze Dokument * -- | | |
| A | US - A - 3 442 000 (GERWIN INDUSTRIES) * Das ganze Dokument * -- | | **RECHERCHIERTE SACHGEBIETE (Int. Cl.³)** |
| A | US - A - 1 908 072 (SPANG) * Abbildungen 2-5a; Seite 1, Zeile 64 bis Seite 2, Zeile 4 * -- | | B 21 D B 23 P D 06 F F 16 B F 16 G |
| A | US - A - 3 857 349 (AMP INCORP) * Abbildungen 1-1d; Spalte 2, Zeile 34 bis Spalte 3, Zeile 26 * ---- | | |

Der vorliegende Recherchenbericht wurde für alle Patentansprüche erstellt.

| Recherchenort | Abschlußdatum der Recherche | Prüfer |
|---|---|---|
| Den Haag | 24-03-1981 | JAIK |

EPA form 1503.1  06.78